# EUROPEAN PATENT APPLICATION

(11) **EP 1 184 210 A2**
(43) Date of publication of application: **06.03.2002**
(21) Application number: 01660156.9
(22) Date of filing: 30.08.2001
(51) Int. Cl.: B60C 23/20

(54) **Vehicle tyre equipped with temperature indicator**

(30) Priority: 01.09.2000 FI 20001929
(71) Applicant: Nokian Tyres PLC., 37100 Nokia (FI)
(72) Inventor: Sievi-Korte, Mika, 37830 Viiala (FI); Löytönen, Samuli, 33820 Tampere (FI); Laitsaari, Juha, 33420 Tampere (FI)
(74) Representative: Pelin, Torolf

(57) **Abstract**

The invention relates to a vehicle tyre comprising a tread (1) in road contact, which comprises a surface (2) that gets in road contact during free rotation of the tyre and two shoulder areas (3) on each side of the central plane (K), and located in order, on each side of the tread and symmetrically to the central plane, two tread wing areas (4) extending the shoulder areas and two sidewalls (5). The tyre of the invention is characterised by at least part of the tyre being made of a material that varies in colour with the temperature.

## Description

The invention relates to a vehicle tyre having a tread in road contact, which comprises a surface in road contact during free rotation of the tyre and two shoulder areas on each side of the central plane, and, located in order on each side of the tread and symmetrically to the central plane, two tread wing areas extending the shoulder areas and two side walls.

Several solutions have been proposed for the measurement of the tyre temperature in the field of tyre technology. All these solutions have the common feature of comprising some kind of sensor, transmitter and receiver. The arrangement disclosed in US patent specification 5,483, 827 can be cited as an example, in which the tyre is provided with an intelligent chip including among other things a temperature detector, a power source, a transmitter and an aerial.

However, solutions of the kind mentioned above involve the drawback of difficult retrofitting in cars after manufacture. They are also expensive and have a complex structure. In addition, they comprise several components that risk getting out of order. Thus their maintenance is also expensive.

Consequently, the purpose of the invention is to provide a vehicle tyre that indicates the tyre and/or outdoor temperature in a simple and economical manner. Another purpose of the invention is to provide such a tyre that can be fitted also in secondhand cars.

The purposes of the invention have been achieved with the solution described in the accompanying claims.

The invention relates to a vehicle tyre, which is characterised by at least part of the tyre being made of a material that varies in colour with temperature.

Thus the vehicle tyre of the invention immediately indicates the outdoor and/or tyre temperature. The temperature at which said material varies in colour can be selected for the purpose of use in each case. The colour may change for instance when the temperature drops below 0 °C, or when the temperature rises to a temperature at which the tyre can no longer be safely used. The temperature range -40 °C to +125 °C can be mentioned as an example. The temperature range may evidently be wider or narrower, for instance between +5 °C and -5 °C. The colour usually changes in a given temperature range, but not at a given temperature. The colour may naturally also vary from colourless to coloured or from one colour to another, etc.

Hence the outdoor and/or tyre temperature is easy and simple to observe by means of the vehicle tyre of the invention. Thus a summer tyre equipped with a temperature indicator allows the risk of an iced road surface to be predicted. The invention is also economical, and it does not impose any special requirements regarding the properties of the vehicle, the tyres of the invention being applicable to any vehicles.

In one embodiment of the invention, the material that varies in colour with the temperature may be at least one part of at least one sidewall of the tyre, at least one part of one tread wing area of the tyre, or of both of these. It is obvious to those skilled in the art that the position of this material can be freely selected. It is also obvious to those skilled in the art and to the user of the vehicle that the solution of the invention indicates the temperature of a tyre that has been recently running, since the tyre is heated while it is running.

Said material that varies in colour with the temperature can obviously be located in the tyre in any shape desired. The material may for instance occur as a suitable pattern on the tyre surface, such as the manufacturer's logo, as letters or figures indicating the temperature, or in the form of stripes. It is further possible to show various technical data (speed rating, size, construction, etc.) by means of such a material. The material may also be provided as a separate part, such as a button, which is embedded in the tyre in any manner known *per se* to those skilled in the art, e.g. by shape locking. In addition, one part of the tyre may be made of a suitable rubber material, to which such material that varies in colour has been added.

In a preferred embodiment of the invention, said material that varies in colour with the temperature is a thermo-chrome pigment. The thermo-chrome pigment has preferably been mixed with plastic. The plastic may be for instance amorphous plastic, allowing a particularly effective colour effect to be achieved. We cite as examples of potential plastic materials polyethylene, polypropylene, polystyrene, polyacrylonitrile butadiene styrene (ABS), or blends of these. Such mixed plastic can generally be processed using normal plastic processing methods, such as injection moulding, blow moulding and extrusion.

The material varying in colour is used for instance in a ratio of about 5-75% by weight, the preferred ratio depending on the material used. Regarding thermo-chrome pigments, the preferred ratio is about 5-25% by weight of the total amount of material. The required amount is also affected by the wall thickness used: usually, the thicker the wall, the smaller the amount of pigment required relative to the overall weight.

The invention is described in further detail with reference to the accompanying drawings, in which
- figure 1: shows the general design of the tyre of the invention,
- figure 2: is a side view of a first embodiment of the invention,
- figure 3: is a side view of a second embodiment of the invention, and
- figure 4: is a side view of a third embodiment of the invention.

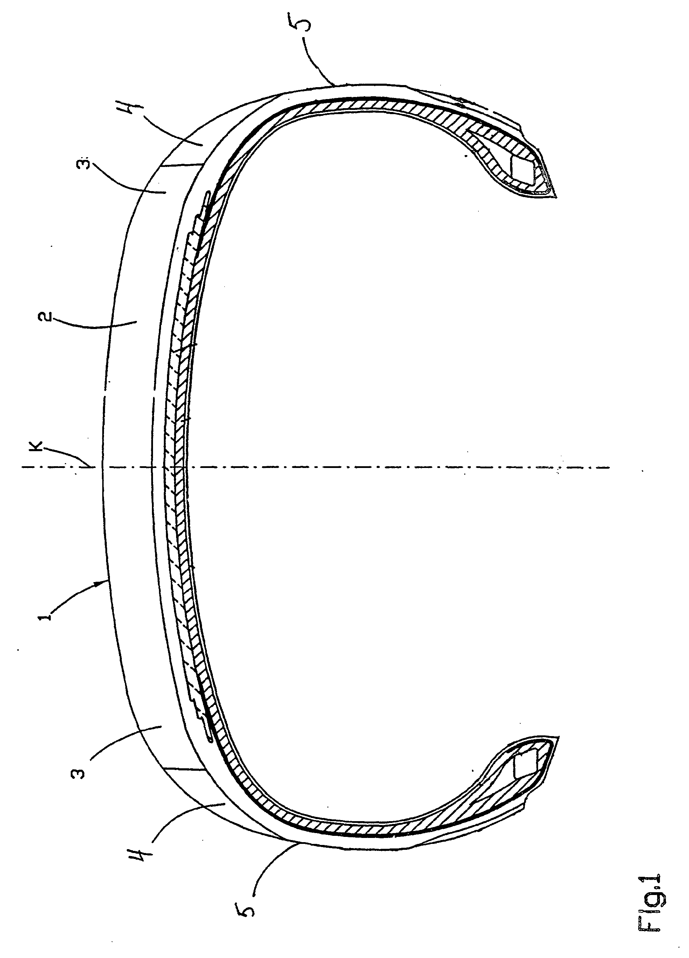

Figure 1 shows the general structure of the tyre of the invention. The figure shows the tread 1 that gets into road contact, the tread comprising a surface 2 that gets into road contact during free rotation of the tyre, and two shoulder areas 3 on each side of the central plane K. The figure also shows, in order on both sides of the tread 1 and symmetrically to the central plane K, two tread 1 wing areas 4 extending the shoulder areas 3 and two side walls 5.

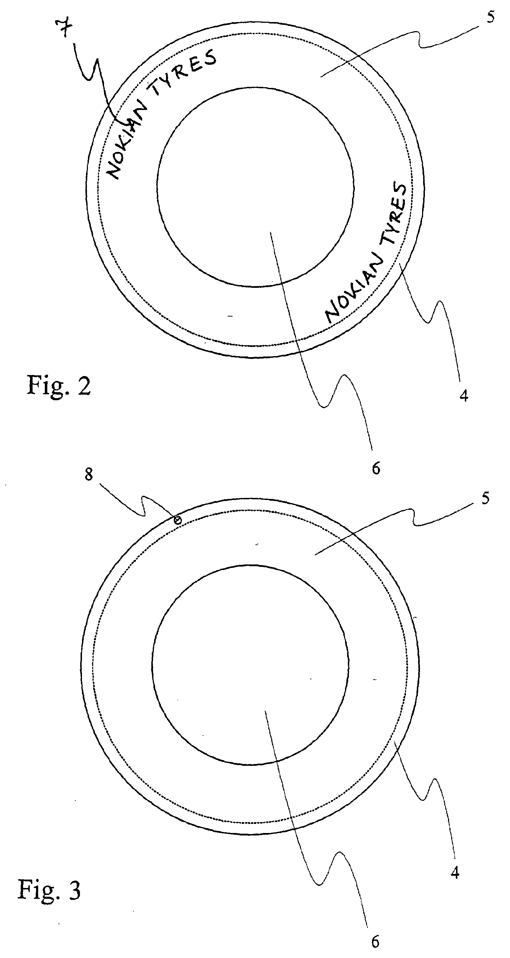

Figure 2 shows a first embodiment of the invention. The figure shows the vehicle tyre of the invention as a side view. The figure shows the tread wing area 4 and the sidewall 4 of the tyre, which have been distinguished with an imaginary broken line. The figure also shows the tyre rim 6. The figure further shows the pattern 7 of a first embodiment of the invention, which is a letter pattern 7 made of a material varying in colour on the sidewall 5 of the tyre.

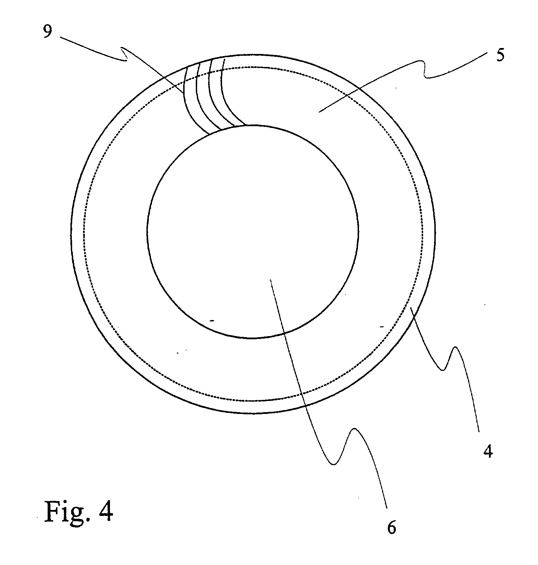

Figure 3 shows a second embodiment of the invention, which is a button 8 made of a material varying in colour in the tread wing area 4 of the tyre and fastened in any manner known by those skilled in the art, for instance by shape locking. Of course, this can also be a colour spot on the tyre surface. The button or spot can also naturally have any shape. Figure 4, in turn, shows a third embodiment of the invention, which is a pattern 9 made of a material that varies in colour and extends from the tread wing area 4 of the tyre to the sidewall 5 of the tyre.

## Claims

1. A vehicle tyre comprising a tread (1) in road contact, which comprises a surface (2) that gets into road contact during free rotation of the tyre, and two shoulder areas (3) on each side of the central plane (K), and, located in order on each side of the tread (1) and symmetrically to the central plane (K), two tread (1) wing areas (4) extending the shoulder areas (3) and two sidewalls (5), **characterised in that** at least part of the tyre is made of a material that varies in colour with the temperature.

2. A tyre as defined in claim 1, **characterised in that** said material varies in colour with the temperature in the temperature range -40 °C - +125 °C.

3. A tyre as defined in claim 1 or 2, **characterised in that** at least part of at least one sidewall (5) of the tyre is made of said material that varies in colour with the temperature.

4. A tyre as defined in claim 1 or 2, **characterised in that** at least part of at least one tread (1) wing area (4) is made of said material that varies in colour with the temperature.

5. A tyre as defined in claim 3 or 4, **characterised in that** at least part of at least one sidewall (5) of the tyre and at least part of at least one tread (1) wing area (4) is made of said material that varies in colour with the temperature.

6. A tyre as defined in any of the preceding claims, **characterised in that** said material that varies in colour with the temperature is a thermo-chrome pigment.

7. A tyre as defined in claim 6, **characterised in that** said thermo-chrome pigment is mixed in a plastic material.

8. A tyre as defined in claim 7, **characterised in that** said plastic material is an amorphous plastic.

9. A tyre as defined in claim 6 or 7, **characterised in that** said plastic material is selected in the group consisting of polyethylene, polypropylene, polystyrene, polyacrylnitrite butadiene styrene, and mixtures of these.
